Europäisches Patentamt

(19) European Patent Office

Office européen des brevets

(11) Publication number: **0 084 440**

A2

(12) # EUROPEAN PATENT APPLICATION

(21) Application number: 83300177.9

(22) Date of filing: 13.01.83

(51) Int. Cl.³: **G 02 B 7/26**

(30) Priority: 15.01.82 US 339275
25.05.82 US 381825
12.08.82 US 407670

(43) Date of publication of application:
27.07.83 Bulletin 83/30

(84) Designated Contracting States:
AT BE CH DE FR IT LI NL SE

(71) Applicant: RAYCHEM CORPORATION
300 Constitution Drive
Menlo Park California 94025(US)

(72) Inventor: Campbell, Bruce Donald
221 Vista Verde Way
Portola Valley California 94025(US)

(72) Inventor: Comet, Francois
26 Avenue de Pessicart
F-06100 Nice(FR)

(72) Inventor: Fentress, Vernon Alvin
4515 Ewing Road
Castro Valley California 94546(US)

(74) Representative: Jay, Anthony William et al,
Raychem Limited Patent Department Faraday Road
Dorcan Swindon Wiltshire SN3 5HH(GB)

(54) Fiber optic splice organizer.

(57) A device and method for organizing a bight in an optical fiber at a splice or slack point, so as to both minimize the size of a container necessary to enclose that light and maximize the radius through which such fiber is bent, is provided. The method comprises laying the bight on a sheet in such a way that, when the sheet is wrapped about a cylindrical core, the radius of any bend in the fiber is greater than the minimum bending radius, and wrapping the sheet about the core. The method is suitable for both in-line and butt splices, and provides ready means of fiber identification and encapsulation.

*FIG—1*

Croydon Printing Company Ltd.

The handling of optical fibers requires special care. This is particularly true in splice enclosures. Due to their size, which can be as small as 0.2 mm in diameter, the handling of fibers is a problem. Transmission capabilities will be impaired if a fiber is bent beyond the critical radius, the point at which light is no longer totally contained in the core of the fiber. Furthermore, fibers are brittle and will break if bent beyond a minimum radius. The minimum radius here refers to that radius below which the probabilty of breakage of the fiber within a given time becomes high. Hereafter, the term "minimum bending radius" will be used to mean that radius below which an optical fiber should not be bent to avoid light loss or damage, i.e. the larger of the critical radius and the minimum radius. This minimum bending radius is typically in the range from 20 to 50 mm. Unconventional methods for the handling and storage of fibers must therefore be devised. While glass and silica (the materials used to make optical fibers) are in some respects stronger than steel, fibers normally do not possess this potential strength because of microscopic surface fractures which are vulnerable to stress and spread, causing the fiber to break easily. Thus, the take-up of fiber slack (a bight in a fiber) in a closure presents a problem for multi-fiber cables, where individual fiber joints are required to facilitate rearrangements and repairs. Another problem is that of identifying individual fibers. In large multi-fiber cables each fiber must be readily identifiable for subsequent testing and repairs. Unlike copper where the insulation may be color coded, coding is difficult with individual optical fibers.

In an attempt to mitigate these problems, a standard splice enclosure with a central transverse bulkhead has been used. The individual fibers are spliced and are attached to the bulkhead for support. A disadvantage of this approach is that storage of slack in the fibers is not provided for. Furthermore, each of the fibers must be individually tagged for identification purposes.

In other splicing arrangements all the fibers in a cable are looped within the same retainer or fiber slack is stored on spools. In either case identification, repair or splice work of individual fibers is extremely difficult without a major shuffle in the splice enclosure. This is undesirable as transmission capability can be affected in working fibers as they are moved.

U.S. Patent No. 4,266,853 describes an organizing device for optical fibers which comprises a plurality of stacked tray-like supports having partially turned-up edges, with each separately hinged at one side thereof to a carrier. Each tray-like support is adapted to retain a looped fiber portion, and has a width at least equal to twice the minimum bending radius specified for that fiber.

Optical fiber communications cables generally include some form of strength and/or sheath member to carry the strain involved in installing the cables in ducts or laying them underwater, since the fibers are not capable of bearing such strains themselves. When two optical fiber cables are spliced there should, therefore, be means provided at the splice to transfer the strain from one cable strength member to the other cable strength member.

According to one aspect of this invention there is provided a device and method for organizing a bight in an optical fiber so as to both minimize the size of a container necessary to enclose that bight and maximize the radius through which such fiber is bent, which method comprises laying out said bight on a sheet in such a way that, when the sheet is wrapped about a cylindrical core, the radius of any bend in the fiber is greater than the minimum bending radius; and wrapping the sheet about the cylindrical core.

According to another aspect of this invention there is provided a device and method for splicing two optical fiber cables each containing at least one optical fiber so as to both minimize the size of the splice and maximize the radius through which each fiber is bent while still allowing sufficient slack for easy joining of the fibers.

According to a further aspect of this invention there is provided a device and method for organizing optical fibers at a splice or slack point so as to render them capable of easy identification and access while both minimizing the size of a container necessary to enclose such fibers and maximizing the radius through which each such fiber is bent.

According to yet another aspect of this invention there is provided a device and method for the ready encapsulation of optical fibers at a splice or slack point.

Figure 1 shows in perspective a first embodiment of the optical fiber splice organizer of this invention.

Figure 2 shows in perspective the device of Figure 1 in use.

Figure 3 shows a partial layout of an optical fiber on a second embodiment of the organizer of this invention.

Figure 4 is a cross-section through an organizer according to this second embodiment.

Figures 5, 6 and 7 show some possible layouts of optical fibers on organizers according to this second embodiment, where Figures 5 and 6 refer to in-line splices and Figure 7 to a butt splice.

Figure 8 shows a third embodiment of the organizer of this invention, where a splice has been laid out on a cassette.

Figure 9 is a cut-away perspective view of a splice between optical fiber cables organized in accordance with this invention.

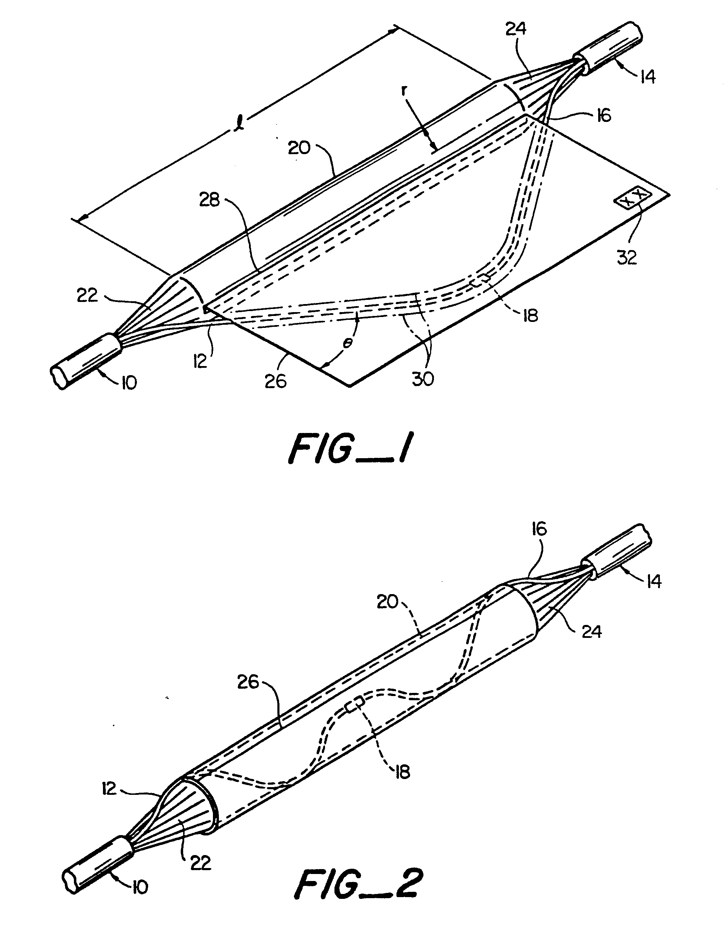

A first embodiment of this invention, in which the wrapping comprises a wrapping to form a pair of helices of opposite handedness, is illustrated in Figures 1 and 2.

Mathematically expressed, if the core is of length $\ell$ and radius r, and a fiber is wrapped helically on it with a helical (pitch) angle $\theta$ (the symbols being shown in Figure 1), the bend radius of the fiber, r' is given by:

$$r' = r/\cos \theta$$

while the length of the fiber stored, $\ell'$, is given by:

$$\ell' = \ell/\sin \theta$$

It is evident from the above that the bend radius of the stored fiber is maximized (i.e. the probability of fiber breakage is minimized) when, for a given r, $\theta$ is large; while the length of fiber stored is maximized when, for a given $\ell$, $\theta$ is small. The length and maximum external radius of a splice are generally determined by external considerations, particularly when, as is usual, it is desired to use standard splice products, so that it becomes a matter of calculation, etc. within the level of one skilled in the art in view of this disclosure to determine a suitable core radius and helical angle for a particular set of circumstances.

A single helical winding may also be used, but disadvantages of the single helix include the inability to locate the core in its final position before making the wrapping, and the fact that all fibers must be manipulated simultaneously. Under some circumstances, these disadvantages may not be significant, however, and the single helix technique may prove useful.

The use of more than a pair of helices is also possible, but since each change of handedness decreases the storing efficiency of the fiber, $\ell'/\ell$, an increase in the number of changes of handedness is not generally advantageous.

In Figure 1, an optical fiber cable shown generally at 10 has an optical fiber 12, while a similar cable shown generally at 14 has an optical fiber 16, with fibers 12 and 16 being spliced or connected at 18 by any suitable method. A cylindrical core 20, having tapering ends 22 and 24, is placed generally parallel to cables 10 and 14 so that its ends abut the ends of the cables. A sheet 26, shown in Figure 1 as comprising two laminae, is attached by one edge 28 to the core, and the spliced fiber 12-18-16 laid out on that sheet in such a fashion that, when the sheet is rolled about the core, the fiber will trace a pair of helices of opposite handedness intersecting at 18.

The material of the sheet may be slightly adhesive to facilitate handling of the optical fiber on the sheet and may comprise, for example, a polymeric foam to provide cushioning for the fiber. A suitable thickness for such a foam sheet may be, e.g., 0.3-1.0 mm and the sheet may, if desired, have a thinner portion to accommodate the fiber connection. Guides to aid the placement of the fiber(s) may be provided on the sheet, such as at 30, accomodating differing bight lengths, while indicia 32 may be placed on the sheet or the sheet colored over at least a part of its surface to identify the fiber(s) associated therewith. The sheet may be transparent to enable visualization of the (wrapped) fiber(s).

The sheet may, if of a suitable thickness, be provided with grooves to receive the fiber(s). In cases where encapsulation of the fibers (covering with a water-excluding jelly, sealant, or the like) is desired, the use of a sheet comprising two laminae is especially valuable. The two laminae are joined along lines 30 forming a tube, and one lamina is cut so as to slit open the tube. The spliced fiber may then be placed into the tube through the cut, and the cut closed, e.g. by the use of a line of adhesive tape over the cut. The tube may then be filled with the encapsulating material, which may be "massaged" along the tube to completely fill it and exclude air. Alternatively, the sheet may be coated with the encapsulating material. More than one tube may be formed in a sheet, if desired.

The core 20 may be made of any suitable material, for example, metal or rigid plastic, and may have a cushioning layer on its outer surface. The taper of regions 22 and 24 is preferably of such a shape that the fiber does not undergo a bend of radius less than the minimum bending radius.

The use of the term "cylindrical" to describe the core is not intended to limit the cross-section to being circular. However, it should be noted that a circular cross-section affords the maximum external radius for a given transverse dimension, and is thus generally preferred. The core need not be solid, nor indeed unitary, and split, composite, and/or hollow cores may be preferred for ease of use. A split core, for example, may be fitted over the joined strength members of two optical fiber cables for use.

Figure 2 depicts the embodiment of Figure 1 after the sheet 26 has been rolled about the core 20, and the fiber is seen to form a pair of helices of opposite handedness. By this means, the bight in the fiber 12-18-16 has been reduced so as to both maximize its bend radius and minimize the size of a container necessary to enclose it. The use of this first embodiment is contemplated particularly when it is desired to minimize the diameter of the container.

A second embodiment, where the wrapping is not at a constant angle to the core, is illustrated in Figures 3 through 7.

Mathematically expressed, if the minimum bending radius of the fiber is $R_{min}$, and the radius of the substrate about which it is wrapped is r (this may represent the core or core and wrapped sheet, as appropriate), then the angle of the fiber relative to the axis of the substrate needed to ensure that the bend radius exceeds $R_{min}$ is given by:

$$\theta < \sin^{-1}(r/R_{min})$$

for r less than $R_{min}$ (the symbols are illustrated in Figures 3 through 7). $\theta$ is then $0^{O}$ for r = 0, and $90^{O}$ for r = $R_{min}$; so that once r exceeds $R_{min}$, the bending limits on the fiber are not imposed by the fact that it is wrapped, but rather by the bend radius laid out flat on the sheet.

If the sheet is of thickness t, and the wrap has a starting radius $R_o$ (less than $R_{min}$), then the length of the sheet wrapped to give a radius r is:

$$L = \frac{\pi (r^2 - R_o^2)}{t}$$

From these, the layout configuration of the fiber on the sheet may be determined so that the minimum bending radius is always exceeded.

Once r exceeds $R_{min}$, there are no constraints on the angle $\theta$, but the bend radius of the fiber when laid out on the sheet must always exceed $R_{min}$. Subject only to that requirement, as much fiber as desired may be laid out on the sheet in any suitable fashion.

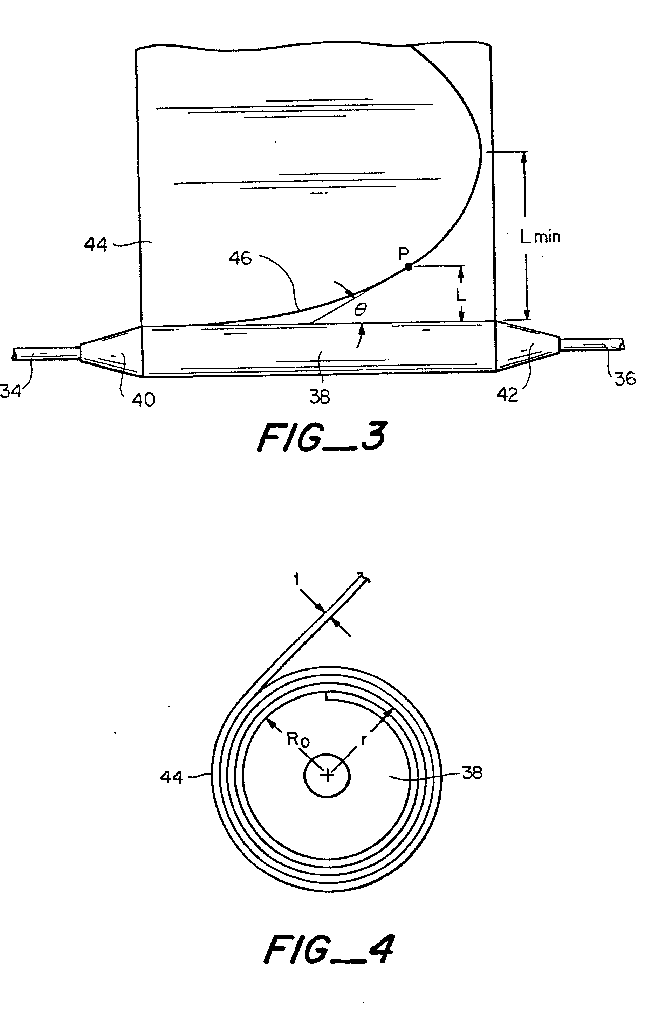

Figures 3 and 4 illustrate the layout of the fiber on the sheet and the wrapping of that sheet about a core.

In Figure 3, optical fiber cables 34 and 36 are shown entering an organizer comprising a core 38 having tapered end portions 40 and 42. A sheet 44 is attached to the core 38 along one edge. A portion of a single fiber 46 is shown laid out on the sheet 44. At a point P, the sheet length to that point is L and the angle between fiber 46 and the axis of core 38 is $\theta$. The radius of the wrapped assembly at that point, when sheet 44 is wrapped about core 38, is then r (Figure 4), and the equations given earlier apply.

When L is $L_{min}$, R is $R_{min}$, and the fiber may then be perpendicular to the core axis without the bend radius being below $R_{min}$ when the sheet 44 is wrapped about the core 38. In this instance, the core radius is $R_o$.

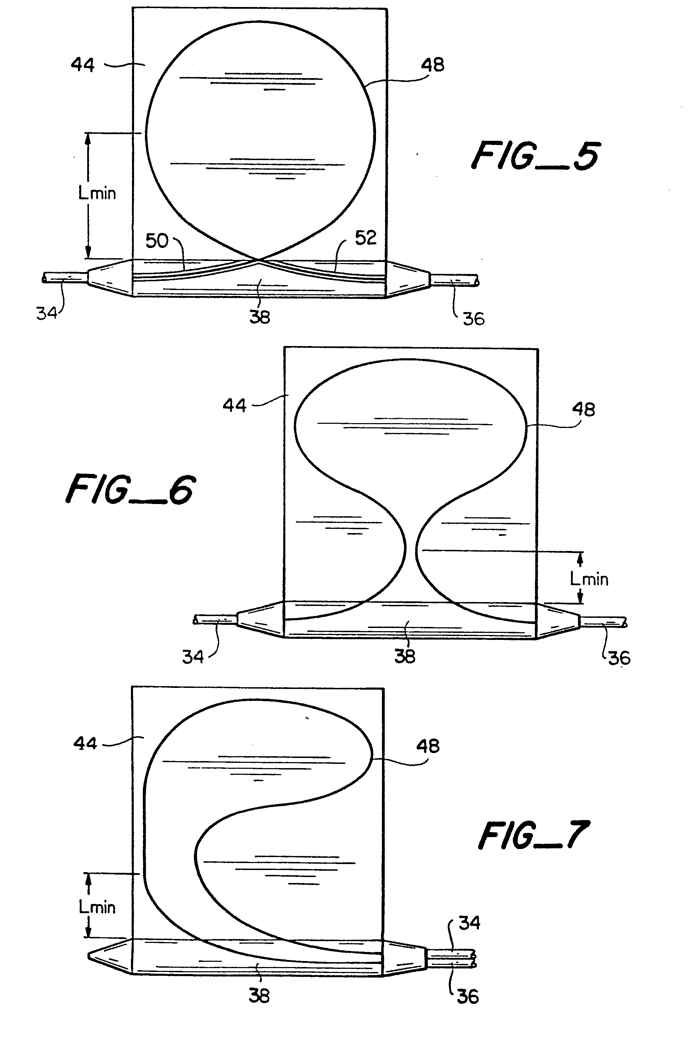

As stated above, when r exceeds $R_{min}$, $\theta$ is not constrained by the wrapping requirement, and Figures 5 to 7 show various ways of laying out fibers on a sheet.

In Figure 5, a fiber 48 is shown running from cable 34 to cable 36. It is laid out on the sheet 44 such that, when the sheet 44 is wrapped about the core 38, the bend radius always exceeds $R_{min}$. Here grooves 50, 52 have been cut in the core 38 to simplify laying out the fibers.

Figure 6 shows an alternative method of laying out the fibers. Again, a fiber 48 is shown laid out on sheet 44. Both Figures 5 and 6 show situations useful for in-line splices or the creation and takeup of a slack point in a fiber optic cable.

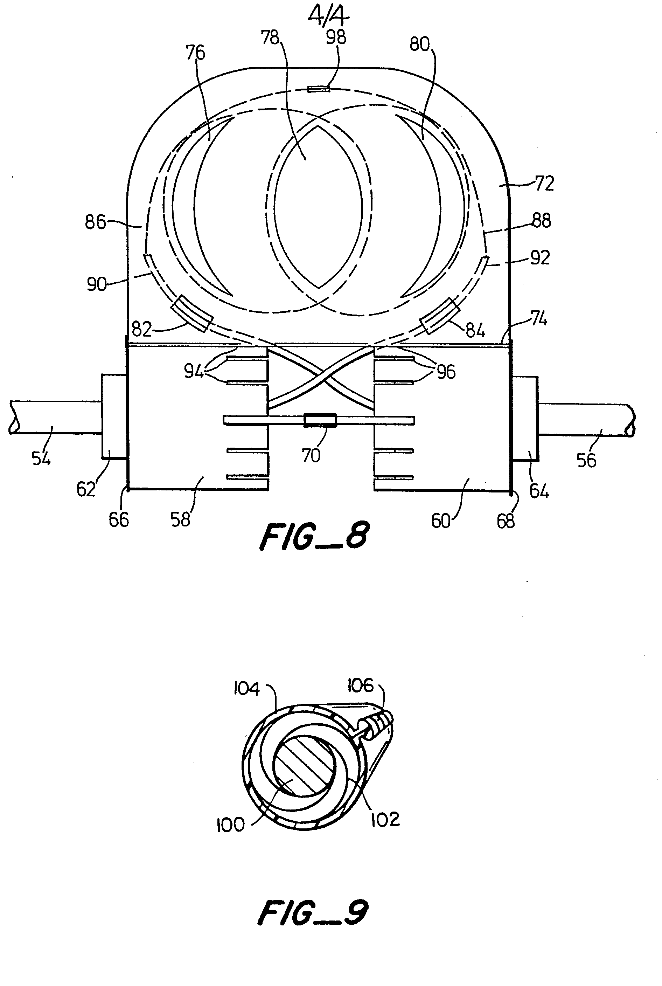

Figure 7 shows the situation where cables 34 and 36 are butt-spliced and illustrates how a fiber 48 may still be organized by this invention.

It can be seen from these Figures that once L exceeds $L_{min}$, any suitable layout configuration may be chosen, so that a large fiber bight may conveniently be organized.

The use of this embodiment is contemplated particularly when minimization of the overall size (rather than just the diameter) of the storage container is desired. The sheet used in this instance, when the core has a radius less than the minimum bending radius of the fiber, will generally be of a sufficient thickness that the radius of the core and wrapped sheet exceeds the minimum bending radius when only a relatively small number of wraps have been made, for convenience. The sheet need not be of uniform thickness, though a sharp change in thickness is undesirable due to the bending induced in a fiber lying on that sheet, and may be quite thin when the radius of the wrapped sheet exceeds the minimum bending radius.

A third embodiment, where the sheet is in the form of a cassette, is illustrated in Figure 8.

In Figure 8, optical fiber cables 54 and 56 are shown entering an organizer having core halves 58 and 60. The core halves are provided with cable clamps 62 and 64 to provide strain relief for the organized fiber(s), and with end discs 66 and 68, each containing a plurality of apertures. The core halves are joined by a fastening means 70, which may be of any suitable nature, and which may also comprise means for fastening the strength members of the optical fiber cables 54 and 56.

The sheet 72 is provided with a flexible but stiff rod 74 attached to one edge, and the ends of this rod, which rod is longer than the sheet, protrude through apertures in the end discs 66 and 68 referred to above, thereby attaching the sheet to the core. Other attachment means may, of course, be used. The sheet or cassette comprises two laminae separated by spacers 76, 78 and 80 which form paths about which an optical fiber may be wrapped. One or both of the laminae may be slit in appropriate places to enable such wrapping. The sheet may also comprise features such as 82 and 84 to aid in retaining the optical fiber.

In this Figure, which illustrates optical fiber cables comprising optical fibers contained in loose tubes within the cable, optical fibers 86 and 88 are shown emerging from the tubes 90 and 92, which are retained on the sheet by features 82 and 84. The tubes emerge from the inside of the core halves 58 and 60 by way of slits 94 and 96, of which a plurality are illustrated on each core half. The fibers 86 and 88, which are spliced at 98, are laid out on the sheet around the spacers 76, 78 and 80 in the form of overlapping loops, and as large a bight as desired may be organized by such a layout.

The radius of the core in this embodiment may be somewhat less than the minimum bending radius of the fibers, depending on the number and thickness of the sheets, following the criteria of the description of Figures 3 through 7. This embodiment is especially advantageous, in that it permits the use of a core which may be as small as 6 cm in diameter and 15 cm long to organize up to about 12 fibers with ease. Because of the short length of this embodiment of the organizer, more than one may be aligned longitudinally if a large number of fibers is to be organized without creating an unduly long assembly.

As has been previously stated, it is a feature of this invention that the radius of the core of the organizer may be less than the minimum bending radius of the fiber(s) to be organized; and, in the case of the first embodiment particularly, the entire bight may be organized within a radius (core plus sheet) less than the minimum bending radius. Since the desired miniaturization of splice containers is generally of overall size, rather than merely of diameter, it is contemplated that the core radius may be greater than the minimum bending radius, especially if this results in a smaller overall size. To some extent, also, an increased core radius simplifies the attachment of sheets to the core. It is therefore generally contemplated that the core radius may be somewhat greater than the minimum bending radius of the fiber, for example, less than twice the minimum bending radius, and preferably smaller, for example less than 1.6 times the minimum bending radius, and more preferably less than 1.3 times the minimum bending radius.

In the discussion of the second embodiment, particularly, it has been suggested that as long as the radius of the core is greater than the minimum bending radius, there are no constraints on the fiber layout other than that the bend radius laid out on the sheet should be greater than the minimum bending radius. This is somewhat of a simplification, and the actual requirement is (as always) that the bend radius of the fibers when wrapped should be greater than the minimum bending radius. In fact, when the core radius is close to the minimum bending radius, it will be desirable for the bend radius laid out on the sheet where the tangent to the bend is perpendicular to the longitudinal axis of the core to be somewhat greater than the minimum bending radius.

Thus, in the third embodiment, particularly, the overlapping loops will preferably have bend radii which are greater when the tangent to the bend is perpendicular to the longitudinal axis of the core than when the tangent to the bend is parallel to the longitudinal axis of the core, and the loops will preferably be of generally elliptical form with the major axis of the ellipse perpendicular to the longitudinal axis of the core.

While Figures 1 through 8 illustrate but a single fiber and sheet, it will be readily apparent that more than one fiber may be placed upon a sheet and/or more than one sheet may be attached to the core so that a plurality of fibers may be organized. The use of multiple sheets offers the advantage that individual fibers may be conveniently accessed with minimum disturbance to other fibers, and identifying indicia may be placed on the sheets to simplify fiber identification. Further, a plurality of cores may be used, especially when the number of fibers to be organized is large.

The assembly, once wrapped, may then be enclosed by any means considered desirable, such as the use of a conventional telecommunication cable splice case and/or a recoverable polymeric sleeve, such as are well-known in the art. A protective liner may be used over the wrapped assembly for additional protection, if desired.

Figure 9 is a cut-away perspective view of a splice between optical fiber cables organized in accordance with this invention. In Figure 9, four sheets 102 have been wrapped around a core 100, and the organized splice enclosed by a wrap-around cover 104 closed by closure 106.

A recoverable sleeve may be tubular or be a wrap-around, such as for example the product described in U.S. Patent No. 3,455,336, and may be heat-recoverable. A heat-recoverable sleeve may be externally heated, such as with a gas torch, or may contain integral heating means, such as for example those described in U.S. Patents Nos. 4,177,446 and 4,223,209.

A slack point may be taken up in the same way as a splice and this offers the ability to create easy access points to a fiber optic cable.

Particular advantages of the method include (i) the ability to easily connect the strength or sheath members to form a rigid splice without interferring with the organization of the fibers, (ii) the ability to use components similar or identical to those used for conventional telecommunications cable splices, and (iii) the small size of the resulting splice while still allowing a sufficient bight in the optical fibers for convenient connection.

Although this invention has been described in detail with respect to certain embodiments, it is to be understood that these are merely illustrative of the benefits conferred by this invention, and are not intended to be limiting on the scope of the claims. In particular, in both the specification and claims, the singular includes the plural unless the context requires otherwise.

Claims:

1. A method of organizing a bight in an optical fiber, especially a bight containing a joint between two optical fibers, characterized in that the method comprises: providing a flexible sheet attached or adapted to be attached to a cylindrical core; laying the bight on the sheet in such a way that, when the sheet is wrapped about the core, the radius of any bend in the optical fiber is greater than the minimum bending radius of the fiber; and wrapping the sheet, together with the fiber, about the core.

2. The method of Claim 1 characterized in that at least one cross-section taken perpendicular to the longitudinal axis of the core intersects the fiber at a plurality of points.

3. The method of Claim 2 characterized in that the bight is laid on the sheet to form a plurality of overlapping loops.

4. The method of Claims 1 to 3 characterized in that the sheet comprises a plurality of laminae, and the fiber is placed between a pair of the laminae.

5. The method of Claims 1 to 4 characterized in that the joint is laid on the sheet.

6.   A device for organizing a bight in an optical fiber according to the method of Claim 1, characterized in that the device comprises:

    a cylindrical core; and

    a flexible sheet, attached or adapted to be attached to the core.

7.   A device according to Claim 6 characterized in that the sheet possesses means for aiding the arrangement of an optical fiber on the sheet.

8.   A device according to Claims 6 or 7 characterized in that the sheet comprises a plurality of laminae.

9.   A device according to Claims 6 to 8 characterized in that the radius of the core is less than 1.6 times, preferably less than 1.0 times, the minimum bending radius of an optical fiber to be organized thereon.

10.   A device according to Claims 7 to 9 characterized in that the means for aiding the arrangement of an optical fiber comprises means for aiding the formation of a plurality of overlapping loops in the fiber.

0084440

*FIG_1*

*FIG_2*

FIG_3

FIG_4

FIG_5

FIG_6

FIG_7

**FIG_8**

**FIG_9**